Europäisches Patentamt

European Patent Office

Office européen des brevets

(19)

(11) Veröffentlichungsnummer: **0 264 538**
B1

(12) **EUROPÄISCHE PATENTSCHRIFT**

(45) Veröffentlichungstag der Patentschrift:
28.03.90

(21) Anmeldenummer: 87107791.3

(22) Anmeldetag: 29.05.87

(51) Int. Cl.⁴: **B27K 3/16,** C01B 35/10,
B27K 3/32, B27K 3/12

(54) **Verfahren zur Herstellung von Borsäure-Suspensionen.**

(30) Priorität: 01.10.86 DE 3633366

(43) Veröffentlichungstag der Anmeldung:
27.04.88 Patentblatt 88/17

(45) Bekanntmachung des Hinweises auf die Patenterteilung:
28.03.90 Patentblatt 90/13

(84) Benannte Vertragsstaaten:
AT CH DE FR GB IT LI NL SE

(56) Entgegenhaltungen:
DD-A- 197 156
US-A- 3 306 860
US-A- 3 629 055

CHEMICAL PATENTS INDEX, BASIC ABSTRACTS
JOURNALS, Abschnitt C, Woche 8523, 31. Juli 1985,
Derwent Publications Ltd, London, GB

(73) Patentinhaber: RÜTGERSWERKE
AKTIENGESELLSCHAFT, Mainzer Landstrasse 217,
D-6000 Frankfurt am Main 1(DE)

(72) Erfinder: Dietrich, Wolfgang, Dr., Im Oberen Rech 7,
D-6802 Ladenburg(DE)
Erfinder: Beez, Volker, Altrheinstrasse 1a,
D-6800 Mannheim 31(DE)
Erfinder: Giebeler, Eberhard, Dr., Obere Kippstrasse 21,
D-6905 Schriesheim 2(DE)

## Beschreibung

Die Erfindung betrifft ein neues Verfahren zur Herstellung von Suspensionen, die feinteilige Borsäure enthalten.

Borsäure und ihre Salze finden vielfach Verwendung als biozide Komponenten in Holzschutzmitteln, wie z. B. Holzschutzsalzpasten, aber auch zur Feuerschutzbehandlung von Holz und Holzwerkstoffen, insbesondere von Spanplatten, sowie bei der Herstellung von Feuerschutzmitteln.

Schwierigkeiten bereitet dabei die geringe Löslichkeit der Borsäure und der Borate in Wasser. Da hierdurch einer gleichmäßigen Verteilung enge Grenzen gesetzt sind, muß anstelle der wäßrigen Borsäurelösung oder Boratlösung eine andere Applikationsform gewählt werden.

Nach DE-PS 2 140 051 werden hochkonzentrierte Lösungen von Borsäure in wasserlöslichen Aminen oder Polyaminen eingesetzt. Damit bringt man allerdings eine in vielen Rezepturen störende Aminkomponente zusätzlich in entsprechende Mischungen. Zudem werden diese Amine nach der Applikation ab- oder ausgewaschen oder verdampfen beim Verpressen der Spanplatte und führen so zu einer Umweltbelastung.

Analoges gilt auch für die gemäß EP-B 0 046 380 eingesetzte Lösung von Borsäure in Ethylenglykol.

Gemäß DE-OS 2 421 289, DE-OS 2 530 295 und DE-OS 2 621 739 werden feuerhemmende Holzspanplatten hergestellt, indem die zur Herstellung der Platten dienenden Holzspäne vor dem Verleimen mit der wäßrigen Lösung einer Borverbindung und einer anorganischen Säure besprüht werden und somit die Borsäure in feinster Verteilung direkt auf den Spänen erzeugt wird.

Das Verfahren ist apparativ aufwendig und wegen der genau zu dosierenden und zu versprühenden Säure in der Handhabung nicht einfach und kann leicht zu fehlerhaften Produkten führen.

Es wurde gefunden, daß eine konzentrierte Suspension aus feinteiliger Borsäure mit geringen Anteilen an Boraten in Holzschutzsalzpasten oder bei der Herstellung von Holzwerkstoffen eine ebenso gleichmäßige Verteilung der Borsäure gewährleistet, wie entsprechende Lösungen der Borsäure in organischen Flüssigkeiten. Darüber hinaus sind diese Suspensionen handhabungssicher und belasten weder Umwelt noch die sie enthaltenden Mittel mit nicht gewünschten organischen Verbindungen.

Es war Aufgabe der Erfindung, ein einfaches Verfahren zur Herstellung derartiger konzentrierter, auch ohne Dispergierhilfen stabile Borsäuresuspensionen bereitzustellen, die sich für den genannten Anwendungszweck eignen.

Die Lösung der Aufgabe erfolgt durch ein Verfahren gemäß der Ansprüche 1 und 2.

Es wurde gefunden, daß die erfindungsgemäßen Suspensionen in einfacher Weise hergestellt werden können, wenn man eine Aufschlämmung von Borsäure in Wasser mit einer alkalischen Lösung versetzt und kurze Zeit aufwirbelt. Durch geeignete Reaktionsführung und eventueller Zugabe von Dispergierhilfsmitteln erhält man eine lagerstabile Suspension.

Dieses Verfahren scheint aufwendig zu sein, wenn man davon ausgeht, daß sich Borsäuresuspensionen auch aus gemahlener Borsäure herstellen lassen. Dieser Weg wäre jedoch aus folgenden Gründen nachteilig: Je höher der Feinheitsgrad, desto aufwendiger wird der Mahlprozeß und die mit dem erfindungsgemäßen Verfahren erhaltene Feinheit ließe sich nur mit sehr großem Mahlaufwand erreichen. Feingemahlene Pulver stauben. Bei ihrer Verarbeitung sind daher eigene Schutzvorschriften einzuhalten.

Zudem wird beim Zermahlen keine einheitliche Korngröße sondern stets ein Gemisch unterschiedlich großer Kristallfragmente erhalten. Eine daraus hergestellte Suspension führt nicht zu einer gleichmäßigen Verteilung des Feststoffes, wie dies bei der erfindungsgemäßen Suspension erfolgt. Außerdem wirken die gebrochenen Kristallfragmente verdickend, so daß ein höherer Wasserbedarf für die Suspension notwendig ist.

Aus diesen Gründen ist die nach dem erfindungsgemäßen Verfahren hergestellte Suspension nicht nur im Herstellungsverfahren einfacher sondern auch in ihren Eigenschaften der Suspension aus gemahlenen Kristallfragmenten überlegen.

Aus AU-A 3 382 784 ist bekannt, eine borsäurehaltige Suspension als Holzschutzmittel einzusetzen, die durch Auflösen von etwa äquimolaren Mengen an Borsäure und Boraten in heißem Wasser und durch rasches Abkühlen der Lösung unter Zusatz von Verdickungsmitteln hergestellt wurde. Abgesehen davon, daß das Verfahren umständlich ist, lassen sich, bedingt durch die Schwerlöslichkeit der Borsäure in Wasser mit diesem Verfahren nur Suspensionen mit relativ geringem Gehalt an Borsäure herstellen.

Eingesetzt wird im erfindungsgemäßen Verfahren technische kristalline oder grobkristalline Borsäure, die mit Wasser im Gewichtsverhältnis 1:1 bis 5:1 aufgeschlämmt wird. Diese Aufschlämmung wird mit einer alkalischen, wäßrigen Lösung versetzt und kurze Zeit aufgewirbelt. Es wird dabei soviel alkalische Lösung eingesetzt, daß das molare Verhältnis von Borsäure zum alkalischen Mittel im Bereich von 1:0,01 bis 1:0,2 liegt.

Da sich Borsäure, wenn auch in geringen Mengen, in Wasser löst oder mit den alkalischen Lösungen zu Salzbildung führt, wird man bestrebt sein, die Wassermenge und damit auch die alkalische Lösung möglichst gering zu halten. Andererseits muß die Aufschlämmung noch so viel Wasser enthalten, daß die Borsäure aufgewirbelt werden kann, was von der gewählten Methode und z.B. im Falle des Aufrührens auch von der Art und Kraft des Rührwerks abhängt. Das in der wäßrigen Lösung zugesetzte alkalische Mittel reagiert mit der Borsäure unter Bildung einer relativ geringen Menge des entsprechenden Borats. Bei den vorgesehenen Verwendungen der Suspension ist der damit erhaltene Boratgehalt nicht störend. Im Gegenteil, beim Einsatz der Suspension zu Feuerschutzzwecken ist z. B. ein Gehalt an Ammoniumborat durchaus erwünscht.

Bei der erfindungsgemäßen "Umsetzung" der Borsäure erwartet der Fachmann lediglich eine Säure-Base-Reaktion im Sinne der Neutralisation der geringen Alkalimenge durch die stöchiometrisch entsprechende Borsäuremenge. Überraschenderweise laufen jedoch neben dieser makroanalytisch leicht zu verfolgenden Neutralisation wesentlich mehr Reaktionen ab, denn nach Beendigung der Umsetzung liegt die Gesamtheit der Borsäure in feinkristalliner, suspendierter Form vor.

Als alkalische Lösung kann eine verdünnte Lösung eines Alkali- oder Erdalkalihydroxis oder eines basischen Ammonium-, Alkali- oder Erdalkalisalzes, eine Ammoniaklösung oder eine heiße Urotropinlösung verwendet werden. Derartige basische Salze sind z. B. Carbonate, Phosphate, Pyrophosphate oder Polyphosphate. Bevorzugt wird eine konzentrierte Ammoniaklösung eingesetzt.

Der Aufschlämmung können noch geringe Mengen (0,1 bis 1,0 Gew.-%, bezogen auf die Gesamtmischung) handelsüblicher Dispergierhilfen zugegeben werden. Unmittelbar nach der Alkalizugabe wird die Borsäure kurze Zeit aufgewirbelt, so daß alle Kristalle mit der alkalischen Lösung in Wechselwirkung treten können. Dieses Aufwirbeln kann durch verschiedene, an sich bekannte Methoden erfolgen, etwa durch Schütteln, Durchblasen eines Gases, Umpumpen oder bevorzugt durch Rühren.

Die Zeit, in der diese Behandlung erfolgt, liegt zwischen 15 und 60 min, je nach Temperatur der Mischung, die im Bereich von 0 bis 80 °C liegen kann, der Menge der verwendeten Lauge und der Kristallgröße der eingesetzten Borsäure.

Bei Borsäure mit einer mittleren Kristallgröße von 0,2 mm beträgt die Behandlungsdauer, das heißt, die Zeit, in der die Borsäure aufgewirbelt werden muß, bei Raumtemperatur und einem molaren Borsäure-Lauge-Verhältnis von 1 : 0,05 etwa 30 min. Danach hat sich durch Umkristallisationsprozesse, deren Mechanismus nicht geklärt ist, eine Suspension mit im feinsten Borsäureteilchen und Boratkriställchen, die hauptsächlich im Größenbereich unter 1000 nm liegen, gebildet.

Die erhaltene Borsäure-Suspensionen eignen sich hervorragend bei der Herstellung flammhemmender oder vor holzzerstörenden Organismen geschützten Holzspan- oder Hartfaserplatten, wenn sie während des Herstellungsprozesses dieser Platten den Spänen oder Fasern oder dem Leim zugemischt werden. Sie eignen sich ebenfalls, zusammen mit anderen Wirkstoffen, zur Herstellung hochwertiger Holz- und Feuerschutzmittel in Pastenform, wenn Staubbildung störend ist.

**Patentansprüche**

1. Verfahren zur Herstellung einer wäßrigen Borsäuresuspension, dadurch gekennzeichnet, daß Borsäure in Wasser im Gewichts-Verhältnis Borsäure zu Wasser von 1:1 bis 5:1 aufgeschlämmt wird, mit einer alkalischen wäßrigen Lösung versetzt und kurze Zeit aufgewirbelt wird, wobei das molare Verhältnis von Borsäure zum verwendeten alkalischen Mittel im Bereich von 1:0,01 bis 1:0,2 liegt.

2. Verfahren nach Anspruch 1, dadurch gekennzeichnet, daß als alkalische Lösung eine wäßrige, konzentrierte Ammoniaklösung verwendet wird.

**Claims**

1. Process for preparing an aqueous boric acid suspension, characterised in that boric acid is suspended in water in the weight ratio boric acid to water of 1:1 to 5:1, is mixed with an alkaline aqueous solution, and is swirled for a short time, the molar ratio of boric acid to the alkaline medium used lying in the range of 1:0.01 to 1:0.2.

2. Process according to claim 1, characterised in that as alkaline solution there is used an aqueous concentrated ammonia solution.

**Revendications**

1. Procédé pour préparer une suspension aqueuse d'acide borique, caractérisé en ce que l'acide borique est mis en suspension dans l'eau dans un rapport de poids entre l'acide borique et l'eau de 1 : 1 jusqu'à 5 : 1, en ce que l'on ajoute une solution aqueuse alcaline et en ce que l'on agite pendant une courte durée, le rapport molaire de l'acide borique par rapport au milieu alcalin utilisé se situant dans le domaine de 1 : 0,01 jusqu'à 1 : 0,2.

2. Procédé selon la revendication 1, caractérisé en ce qu'en tant que solution alcaline on utilise une solution aqueuse d'ammoniaque concentrée.